# EUROPEAN PATENT APPLICATION

(11) **EP 2 871 795 A1**
(43) Date of publication of application: **13.05.2015**
(21) Application number: 13191833.6
(22) Date of filing: 06.11.2013
(51) Int. Cl.: H04L 1/16, H04L 1/20

(54) **Method and controller for controlling at least one load**

(71) Applicant: MyOmega System Technologies GmbH, 90411 Nürnberg (DE)
(72) Inventor: Möller, Bernd, 91239 Henfenfeld (DE)
(74) Representative: Westphal, Mussgnug & Partner Patentanwälte mbB

(57) **Abstract**

Disclosed is a controller for controlling at least one load, and a method for operating the controller. The controller comprises:
a wireless first communication interface, and
at least one second communication interface,
wherein the controller is configured to communicate with a mobile device through the first interface, and to communicate with at least one load through the at least one second interface, and wherein the controller is configured to detect a collision in the communication between the at least one load.

## Description

Embodiments of the present invention relate to a method and a device for controlling at least one load.

Home control or home automation is becoming more and more popular. Home control may include control of lighting, heating, air conditioning, security systems, home entertainment, and the like. A home control system includes a controller and at least one load (actor) coupled to the controller. The at least one load my include one of a light, a thermostat, an air condition, or a door lock.

Different busses or communication protocols exist for the communication between the controller and the at least one load, such as Z-Wave, ZigBee, or KNX. Z-Wave and ZigBee are wireless communication protocols that use the ISM (Industrial Scientific Medical) frequency band. KNX may use a wired or a wireless network infrastructure in the ISM band.

The growing popularity of home control systems may result in home control systems with a large number of loads. Especially in those cases where the loads are controlled using a wireless communication protocol this may cause interference problems. Further, loads that can be controlled using one of the protocols usually are not compatible with other protocols. Thus, it may become necessary to install two or more home control systems based on different technologies in one home, with each of these systems including one dedicated controller.

The problem underlying the present invention is to provide an improved method and an improved controller for controlling at least one load, in particular a load in a home control system.

This problem is solved by a controller in accordance with claim 1, and by a method in accordance with claim 12.

A controller according to one embodiment includes a wireless first communication interface, and at least one second communication interface. The controller is configured to communicate with a mobile device through the first interface, and to communicate with at least one load through the at least one second interface, and wherein the controller is configured to detect a collision in the communications between the at least one load.

A method according to one embodiment includes communicating by a controller with a mobile device through a first interface, and with at least one load through at least one second interface, and detecting by the controller a collision in the communication between the at least one load and the controller.

Examples are explained below with reference to the drawings. These drawings serve to illustrate certain principles, so that only aspects necessary for understanding these principles are illustrated. The drawings are not to scale. In the drawings the same reference characters denote like features.
- Figure 1: shows one embodiment of a conventional home control system;
- Figure 2: shows one embodiment of a home control system that includes a controller according to one embodiment;
- Figure 3: shows one embodiment of the controller based on an OSI Layer Model;
- Figure 4: illustrates one embodiment of a communication between the controller and one load;
- Figure 5: illustrates a collision detection performed by the controller;
- Figure 6: illustrates a re-routing of a message after a collision has been detected;
- Figure 7: illustrates a re-sending of a message after a mobile device coupled to the controller has changed its mode of operation.

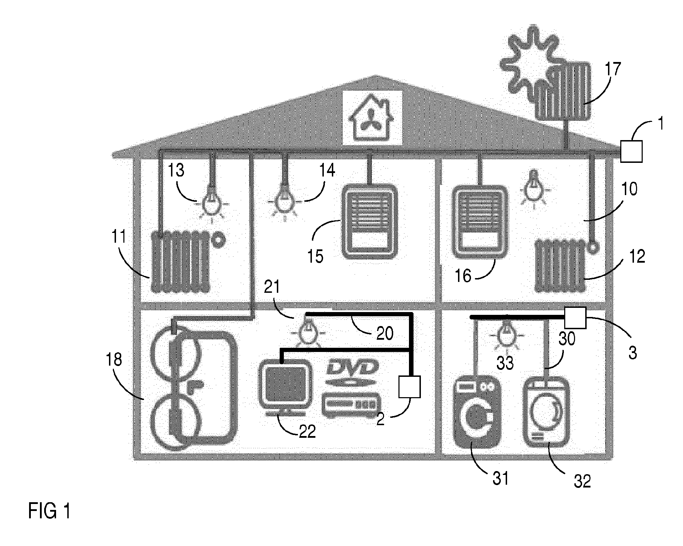

In order to ease understanding of embodiments of the invention, Figure 1 schematically illustrates one embodiment of a conventional home automation system. This system includes a plurality of loads 11-18, 21-22, 31-32 that can be remotely controlled via communication busses 10, 20, 30. Examples of these loads include radiators 11, 12, lights 13, 14, 21, 33, blinds 15, 16, a solar system 17, a central heating system 18, an entertainment system 22, a washing machine 31, or a laundry dryer 32. In the system shown in Figure 1, there are three different communication busses, wherein each of the plurality of loads is coupled to one of these busses 10, 20, 30. Each of these busses 10, 20, 30 and the loads 11-18, 21-22, 31-32 coupled thereto are part of one control system, wherein each of these control systems includes an individual controller 1, 2, 3 coupled to the respective bus 10, 20, 30. Each of these controllers 1, 2, 3 allows a user to remotely control the loads coupled to the respective bus 10, 20, 30.

The individual busses 10, 20, 30 may support a wireless communication protocol, such as Z-wave, ZigBee, or WIFI (WLAN), or a wired communication protocol such as KNX. For example, a first communication bus 10 shown in Figure 1 is a KNX bus, and a first controller 1 coupled to the first bus 10 is a KNX controller, a second bus 20 is a Z-wave or ZigBee bus, and a second controller 2 coupled to the second bus 20 is a Z-wave or ZigBee controller, and a third bus 30 is a WIFI bus, and a third controller 3 coupled to the search bus 30 is a WIFI controller.

The coexistence of several independent home control systems may cause different problems. First, each system requires its own controller, such as controllers 1, 2, 3 illustrated in Figure 1. Second, interference problems may occur when there are two ore more wireless systems that use the same frequency bands, such as the ISM band used by Z-Wave and ZigBee. Third, interference problems may occur between loads of one wireless control system and mobile devices, such as mobile phones, using neighboring frequency bands. For example, the LTE (Long Term Evolution) band 20 is close to the ISM band that Z-wave or ZigBee control systems use.

Thus, it is desirable to have one controller for loads supporting different types of communication protocols, such as Z-Wave, ZigBee, enocean, WIFI, KNX, or even CAN (Controller Area Network). The latter may be used in a car.

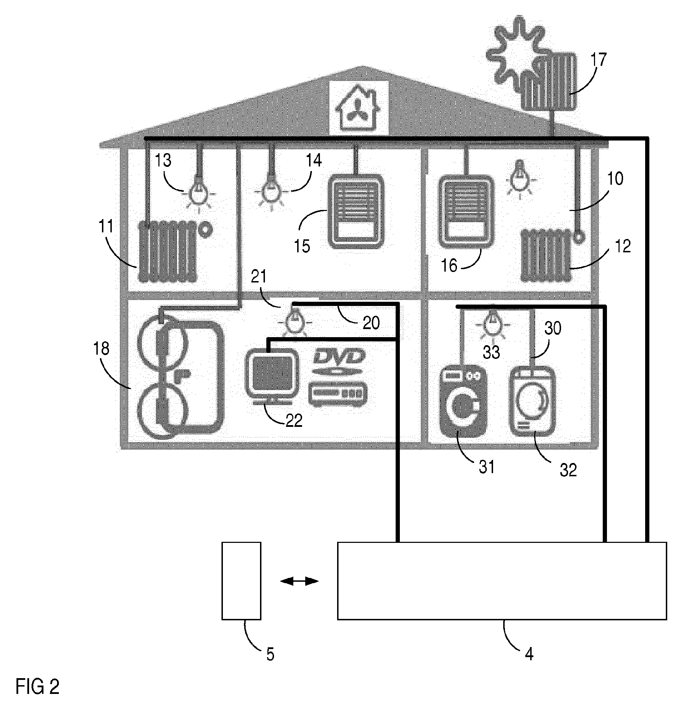

Figure 2 schematically illustrates one embodiment of a control system that includes a plurality of loads 11-18, 21-22, 31-33 each coupled to one of three different busses 10, 20, 30, and one controller 4 configured to control the individual loads via the busses they are connected to. The controller 4 is configured to communicate with a mobile computing device 5. The mobile computing device 5 (that will be briefly be referred to as mobile device in the following) may be implemented as a conventional mobile device, such as a mobile phone (smart-phone), a tablet computer, a notebook computer, or the like. A communication channel between the controller 4 and the mobile device 5 is, for example, a wireless communication channel, such as a communication channel using a WIFI communication protocol. The controller 4 may be mounted inside a building, such as a home, or a factory, and a user may remotely control the individual loads from the mobile device 5 via the wireless channel between the mobile device 5 and the controller 4, the controller 4, and the individual busses 10, 20, 30 between the controller 4 and the individual loads.

The busses 10, 20, 30 are schematically illustrated by lines in Figure 2. However, this does not imply that the individual busses include communication lines.

These busses 10, 20, 30 may be implemented as wire busses, or as wireless busses.

The controller 4 can be implemented as a programmable device that includes at least one CPU (Central Processing Unit), a memory, and at least one communication interface. According to one embodiment, the controller has a basic architecture corresponding to an architecture (mobile architecture) of a mobile phone, or a tablet computer. However, the controller 4 may include communication interfaces that are usually not available on a mobile phone. That is, the controller 4 may support communication protocols that are usually not supported by a mobile phone. For example, a modern mobile phone supports 2G, 3G, WIFI, and LTE communication protocols, but does not support communication protocols required to communicate with loads in a home or factory automation system, such as loads supporting Z-Wave, ZigBee, or KNX protocols.

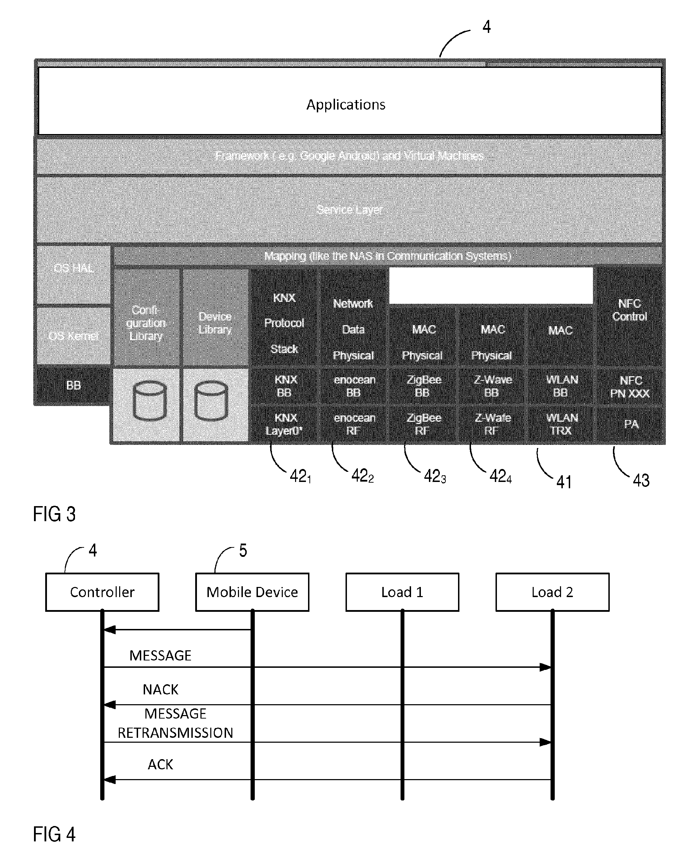

Figure 3 illustrates one embodiment of the controller 4 based on an OSI (Open Source Interconnection) 7-Layer Model.

Referring to Figure 3, the controller 4 includes a first communication interface (that may also be referred to as side A interface) 41 for communication with the mobile device 5. The first interface 41 is, for example, a WIFI interface and includes an MAC (Media Access Control) (OSI Layer 3, Network Layer), a base band (BB) processing unit (OSI Layer 2, Data Link Layer), and a physical transmission unit (OSI Layer 1, Physical Layer). In case of a WIFI interface, the physical transmission unit is a radio frequency (RF) transceiver.

Referring to Figure 3, the controller 4 includes at least one second interface (that may also be referred to as side B interface) 42₁-42₄ for communication with at least one load. This at least one second interface is configured to send instructions from an application (OSI Layer 7, Application Layer) running on the controller 4 to the at least one load coupled to the respective interface, and to receive messages from the load and to forward the message to the application. The application (OSI Layer 7) communicates with the first interface 41 and the at least one second interface 42₁-42₄ through a framework (OSI Layer 6), a service layer (OSI Layer 5), and a mapping layer (OSI Layer 4, Transport Layer). The framework is, for example, a Google™ Android™ framework.

Referring to Figure 3, the controller 4 includes an operating system (OS) hardware annotation library (HAL), and an operating system kernel. One example of the operating system of the controller 4 is Linux. Referring to Figure 3, the controller further includes a configuration library and a device library (in OSI Layer 3 with a corresponding hardware (memory) in OSI Layers 1 and 2) that are explained in further detail herein below.

The at least one second communication interface 42₁-42₃ is, for example, an interface that is in accordance with one of the currently known home control protocols, such as Z-wave, ZigBee, KNX, or enocean. Z-Wave, ZigBee, and enocean are wireless communication protocols, while KNX may include a wired or a wireless communication protocol.

The mobile device 5 communicates with the controller 4 through the first communication interface 41. However, this first interface 41 may also be used by the controller 41 for a communication with a load.

The controller 4 not necessarily includes a user interface, because interaction between the controller 4 and a user is performed through the mobile device 5 that includes a conventional user interface, such as a touch screen, or a speech input. The application running on the controller 4 can be installed (and updated) by the mobile device 5 through the communication channel between the mobile device 5 and the controller 4.

According to one embodiment, the controller 4 is configured to register the mobile device 5, and to accept commands from the mobile device 5 only after the mobile device 5 has been registered. A command transmitted from the mobile device 5 to the controller 4 is, for example, a command to control one of the loads coupled to the controller 4 through one of the first and second interfaces 41, 42₁-42₄.

According to one embodiment, the controller 4 additionally includes an NFC (Near Field Communication) interface, and a secure element. In this case, registering the mobile device 5 in the controller may include a pairing of the controller 4 and the mobile device 5 using the NFC interface 43 in the controller and a corresponding NFC interface (not shown) in the mobile device 5. For this, the mobile device 5 is to be brought in close proximity to the controller 4, such as 5cm or less, so that a communication between the controller 4 and the mobile device 5 through the NFC interfaces can be started. Pairing of the controller 4 and the mobile device 5 may include security mechanisms, like mutual authentication and asymmetric key exchanges. After such pairing has been completed, the mobile device 5 is registered in the controller 4, so that the controller 4 will then accept a communication with the mobile device 5 through the first communication interface 41. Via this first communication interface 41, the controller 4 may receive the application to be installed on the controller 4, and, after the application has been installed, commands for controlling individual loads coupled to the controller. In this connection it should be noted that "a load coupled to an interface of the controller 4" is a load that is configured to be addressed (controlled) by the controller 4 through the interface. If the interface is an interface for a wired connection, such as a KNX interface, the load may physically be coupled to the interface through a wired communication bus. However, in case the interface is a wireless interface the load is coupled to the interface "over the air".

Referring to the explanation above, known wireless communication protocols for home control applications use the same frequency band so that interference problems may occur in a conventional system. Further, the frequency band (IMS band) of these wireless communication protocols is adjacent the LTE band 20 that may be used by mobile devices. According to one embodiment, the controller 4 performs a collision management that prevents an interference of the loads controlled by the controller 4, and that prevents or at least reduces an interference between those loads and the mobile device 5. This is explained with reference to Figures 4-7 below.

Figures 4-7 schematically illustrates a signal communication between the controller 4, the mobile device 5 and two loads controlled by the controller 4. It should be mentioned that the controller 4 may control a plurality of loads, as explained with reference to Figure 2 above. However, for the purpose of explanation only two of these loads are schematically illustrated in Figures 4-7.

Each of the two loads illustrated in Figures 4-7 communicates with the controller 4 via the at least one second interface 42₁-42₄. According to one embodiment, the controller 4 is configured to transmit a message to one load, such as the second load illustrated in Figure 4, and waits for the load to acknowledge the message. The message may be a conventional message that controls the load. Examples of this message include a command to switch on/switch off when the load is a light, a command to open/close when the load is a blind, a command to increase/decrease the temperature when the load is a radiator, or even more complex commands when the load is a more complex system, such as a central heating system, a solar system, or a home entertainment system, to mention only some examples of more complex loads. A message sent from the controller 4 to one load can be initiated by the mobile device 5. That is, a user may use an application running on the mobile device 5 to identify a load that is to be controlled, and to select a certain functionality the load is to perform. The mobile device 5 transmits the corresponding information to the controller via the first interface 41, and the controller 4 controls the load selected by the user correspondingly.

According to one embodiment, the controller 4 schedules the messages to be transmitted to the individual loads. That is, in order to avoid interferences, the controller waits to start a communication with a load until a communication with a load addressed before has been terminated. Some examples of communication scenarios between the controller 4 and one load are explained with reference to Figures 4-7 below.

Referring to Figure 4, the controller 4 may be configured to retransmit a message to a specific load (the second load in the embodiment shown in Figure 4) when the load has not acknowledged the message sent before. In the embodiment shown in Figure 4, the load acknowledges the message after the message has been retransmitted. In this case, the controller 4 may start a new communication with the same load (to transmit a new command, for example) or with another one of the loads coupled to the controller 4. However, there may be scenarios in which the controller 4 needs to re-transmit the message more than once before the load acknowledges the message. In those cases, a time limit may be set, so that the controller 4 stops re-transmitting the message when a predefined time period has lapsed without the load having acknowledged the message. Additionally or alternatively, the number of re-transmission may be limited to a predefined number.

In particular in those cases, in which the controller 4 uses a wireless communication protocol, the reason for the controller 4 not to receive an acknowledge from a load may be interference problems with devices using the same frequency band as the wireless communication protocol used by the controller 4. The device interfering with a communication between the controller 4 and a load may be the mobile device 5 the controller 4 communicates with. For example, the communication protocol used by the controller 4 may use the ISM band, and the mobile device 5 may use the neighboring LTE 20 band. According to one embodiment, the controller 4 is configured to resolve such interference (collision) between the mobile device 5 and the loads coupled to the controller 4.

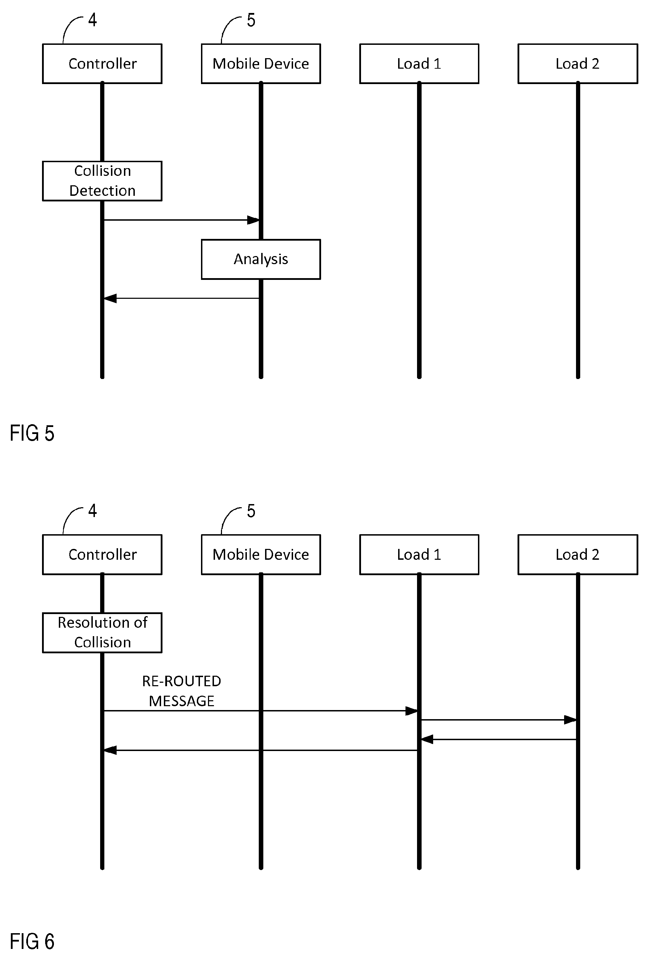

Referring to Figure 5, the controller 4 may be configured to detect collisions (interferences). This may include a measurement of the quality of transmission between the controller 4 and one load. In particular, the controller may measure the signal quality of signals received from the at least one load. For example, a collision is detected when the signal quality is below a predefined threshold (which is equivalent to the bit error rate being above a predefined threshold). Referring to Figure 3, the collision detection and the means to resolve collision problems may be performed by the mapping layer.

According to another embodiment, retransmissions that are required in order to receive an acknowledge from a load are statistically evaluated. In this case, a collision may be detected when an average number of retransmissions reaches (or is a above) a predefined threshold.

Optionally, the detection of a collision also involves an analysis in the mobile device 5. In this embodiment, the controller 4 triggers the mobile device 5 to analyze the most recent communication transfers by the mobile device 5. "Most recent communication transfers" in this connection may include communication transfers within several seconds up to several minutes before the mobile device 5 was triggered by the controller 4 to analyze the communication transfers. The analysis of the communication transfers may include analyzing bit error rates and/or quality levels of the communication transfers. Referring to Figure 5, the mobile device 5 then returns the results of the analysis to the controller 4. Besides the information on the quality of the most recent communication transfers, those results may include information on the communication protocols used in connection with the most recent communication transfers, such as WIFI, LTE, 3G, 2G, Bluetooth, or the like.

According to one embodiment, before the controller 4 triggers the mobile device 5 to perform the analyses explained before, the controller 4 is configured to interrupt communication with those loads that use communication channels (communication protocols) that may interfere with the communication between the controller 4 and the mobile device 5. For example, when the first interface 41 used in the communication between the mobile device 5 and the controller 4 is a WIFI interface, so that the communication between the mobile device 5 and the controller 4 uses a WIFI protocol, all wireless communication between the controller 4 and the loads are interrupted that may interfere with the communication between the controller 4 and the mobile devices 5. This is to make sure that the mobile device 5 safely receives the command that triggers the mobile device 5 to perform the analysis.

Based on the collision detection performed by the controller 4, and optionally based on the analysis performed by the mobile device 5, the controller 4 is configured to resolve possible collisions. According to one embodiment, illustrated in Figure 6, the controller 4 is configured to re-route a message to a load after a collision has been detected. Re-routing the message may include transmitting the message to a desired load, such as the second load illustrated in Figure 6, via another load, such as the first load illustrated in Figure 6. If, for example, the second load is located more spaced apart from the controller 4 than the first load, then transmitting the message to the first load, and transmitting the message from the first load to the second load may increase the signal quality and may therefore make the communication between the controller 4 and the second load more robust. Referring to Figure 6, messages from the second load, such as acknowledges, are transmitted to the controller 4 via the first load when the controller 4 has initiated a re-routing of messages in order to avoid collision.

According to one embodiment, the controller 4 includes a configuration library that includes information on how the system with the controller 4 and the individual loads is configured. In particular, the configuration library may include information on how the individual loads are spatially arranged in the system. Additionally, the controller 4 may include a device library that includes specific information on the individual loads used in the system. For example, the device library may include information on whether a specific load, such as the first load shown in Figure 6, has a functionality to act as a relay that can receive messages from the controller 4 and forward these messages to another load, such as the second load. In the embodiment shown in Figure 3, the configuration library and the device library are integrated in the controller. Alternatively, the configuration library and the device library are located in a an external storage device, such as a cloud, the controller 4 has access to.

Re-routing of messages may be suitable in order to avoid or reduce collisions if the collisions do not result from the mobile device 5, or when analysis data from the mobile device 5 are not available. In case the analysis data show that the collision detected by the controller 4 result from the mobile device 5, the controller 4 may be configured to cause the mobile device to change its operation in order to avoid those collisions. Those changes in the operation may include, but are not restricted to:
a. A technology migration. That is, the controller 4 may cause the mobile device 5 to use another communication protocol, such as 3G instead of LTE.
b. A change of the used frequency band. If, for example, the mobile device 5 is currently using an LTE band that possibly interferes with the frequency bands used by the controller 4 to communicate with the loads, the controller 4 may cause the mobile device 5 to change to another LTE frequency band.
c. A change of the transmission parameters of the mobile device. That is, the controller 4 may cause the mobile device to reduce transmission rates, to use single carrier transmission instead of multicarrier transmission, or the like.
d. Further, the controller 4 may cause the mobile device 5 to report transmission gaps to the controller 4. The controller 4 may then use those transmission gaps to communicate with the loads coupled to the controller 4.

Modern mobile frameworks (such as Android™) on mobile devices enable an application running on the mobile device to change the operation mode of the mobile device in at least one of the ways explained above. That is, the application running on the mobile device 5 that can be used by a user to control the individual loads via the controller 4, may also be used by the controller 4 to change the operation of the mobile device in case a collision caused by the mobile device 5 has been detected.

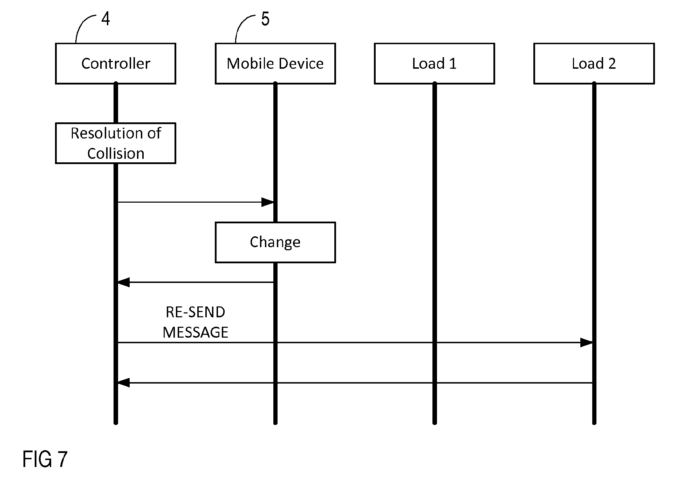

Referring to Figure 7, the controller 4 can be configured to re-send the message to a desired load after the mobile device has changed its mode of operation. Referring to Figure 7, the mobile device 5 may send a confirmation message confirming a change of the mode of operation to the controller 4, which then may re-send the message to the load.

In case the mobile device 5 is not responsible for a detected collision or when a change of the operation mode of the mobile device 5 is not possible, besides a re-routing (which is not possible with some types of loads) explained with reference to Figure 6, the controller 4 may employ other means to avoid/reduce collisions. According to one embodiment, this may include a change of the transmission technology used by the controller 4, if this is supported by the communication protocol of the load. According to another embodiment, this may include a re-scheduling of the message transmission to the individual loads. This may include that the controller 4 detects time gaps in which a probability of collisions is reduced, and transmits messages to the loads in those time gaps.

Those time gaps may be reported to the controller 4 by the mobile device 5 in those cases in which the mobile device 5 may cause collisions. In other cases, the controller 4 may repeatedly transmit a dummy message to one load and may analyze the signal quality of the communication with this load in order to detect those time gaps in which a communication is possible.

According to another embodiment, the controller 4 is configured to use redundancy technologies and/or error correction methods in the communication with the individual loads. Those redundancy technologies and/or error correction methods increase the robustness of the communication with the individual loads. Conventional channel coding methods such as the use of a parity bit, to mention only one, may be used in order to increase the robustness of the communication.

It should be noted, that the controller 4 explained herein before is not restricted to be used in connection with a home control (home automation) system. Instead, this controller may also be used in industrial environments, or even in cars. A controller 4 used in a car may include an interface for communication with loads coupled to a CAN (Controller Area Network) bus.

Referring to the explanation above, the controller 4 may be programmed using the mobile device 5. That is, a computer program (software code) may be installed on the controller by the mobile device. The mobile device 5 may have a conventional mobile device architecture and a conventional operating system, such as Android (by Google™) or iOS (by Apple™). In this case, the mobile device 5 may receive the application to be used on the mobile device 5 and on the controller 4 in a conventional way, from an application store, such as Google Play. Thus, an existing ecosystem can be used for obtaining the application that runs on the controller.

## Claims

1. A controller, comprising:
a wireless first communication interface, and
at least one second communication interface,
wherein the controller is configured to communicate with a mobile device through the first interface, and to communicate with at least one load through the at least one second interface, and wherein the controller is configured to detect a collision in the communication between the at least one load.

2. The controller of claim 1,
wherein to communicate with the at least one load comprises:
sending a message to the at least one load,
waiting for an acknowledge received from the load, and
resending the message until the load acknowledges the message or until a predefined number of resendings has been reached, and
wherein the controller is configured to detect the collision based on evaluating the number of resendings until an acknowledge is received.

3. The controller of claim 1 or 2,
wherein the controller is configured to detect the collision based on evaluating a signal quality of signals received from the at least one load.

4. The controller of one of the preceding claims, further configured to re-route a message to the at least one load via another load after a collision has been detected.

5. The controller of one of the preceding claims, further configured to cause the mobile device to change an operation mode after a collision has been detected.

6. The controller of one of the preceding claims, further configured to communicate with the at least one load in time intervals communicated by the mobile device after a collision has been detected.

7. The controller of one of the preceding claims, wherein detecting the collision further includes receiving analysis data from the mobile device.

8. The controller of one of the preceding claims, wherein the at least one second communication interface is selected from the group consisting of:
a Z-Wave interface,
a ZigBee interface,
a KNX interface,
an enocean interface, and
a CAN interface.

9. The controller of one of the preceding claims, wherein the first interface is one of a WIFI, and an LTE interface.

10. The controller of one of the preceding claims, further comprising:
an NFC interface,
wherein the controller is configured to register a mobile device using the NFC interface.

11. The controller of claim 10, wherein the controller is configured to only communicate with a mobile device that has been registered.

12. A method comprising:
communicating by a controller with a mobile device through a first interface, and with at least one load through at least one second interface,
and detecting by the controller a collision in the communication between the at least one load and the controller.

13. The method of claim 12,
wherein communicating by the controller comprises:
sending a message to the at least one load,
waiting for an acknowledge received from the load, and
resending the message until the load acknowledges the message or until a predefined number of resendings has been reached, and
wherein the controller is configured to detect the collision based on evaluating the number of resendings until an acknowledge is received.

14. The method of claim 12 or 13, further comprising, after a collision has been detected, at least one of
re-routing a message to the at least one load via another load, and causing the mobile device by the controller to change an operation mode.

15. A computer program comprising software code adapted to perform method steps in accordance with one of the claims 12 to 14 when installed on a controller.
